# EUROPÄISCHE PATENTANMELDUNG

(11) **EP 4 756 621 A1**
(43) Veröffentlichungstag der Anmeldung: **10.06.2026**
(21) Anmeldenummer: 24217144.5
(22) Anmeldetag: 03.12.2024
(51) Int. Cl.: G06F 11/00, G06F 11/3668

(54) **VERFAHREN UND SYSTEM ZUM BESTIMMEN EINER AUFTRITTSWAHRSCHEINLICHKEIT EINER AUSLÖSEBEDINGUNG FÜR EINE SYSTEMSCHWÄCHE EINES ZU TESTENDEN SYSTEMS**

(71) Anmelder: dSPACE SE & Co. KG, 33102 Paderborn (DE)
(72) Erfinder: Wiegand, Christopher, 33102 Paderborn (DE); Harlammert, Nora, 33102 Paderborn (DE); Sontheim, Florian, 33102 Paderborn (DE)

(57) **Zusammenfassung**

Die Erfindung betrifft ein computerimplementiertes Verfahren und System (1) zum Bestimmen einer Auftrittswahrscheinlichkeit (10) einer Auslösebedingung (11) für eine Systemschwäche (12) eines zu testenden Systems (14), insbesondere einer automatisierten Fahrfunktion (15) eines Kraftfahrzeugs umfassend ein Modellieren (S3) der Auslösebedingung (11) durch ein Vorhersagemodell (18), insbesondere ein Markov-Modell, zum Bestimmen der Auftrittswahrscheinlichkeit (10) der Auslösebedingung (11) für die jeweilige Systemschwäche (12) des zu testenden Systems (14) basierend auf dem ersten und zweiten Datensatz (DS1, DS2).

## Beschreibung

Die Erfindung betrifft ein computerimplementiertes Verfahren zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs.

Die Erfindung betrifft ferner ein System zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs.

Die Erfindung betrifft ferner ein Computerprogrammprodukt mit einem Computerprogramm sowie einen computerlesbaren Datenträger mit Programmcode eines Computerprogramms.

### Stand der Technik

Die rapiden Fortschritte in der Technologie des autonomen Fahrens (AD) haben den Verkehr revolutioniert und bieten das Potenzial für eine effiziente und bequeme Mobilität. Mit der Verlagerung der Kontrolle von Menschen auf Maschinen entstehen jedoch neue Herausforderungen bei der Gewährleistung der Sicherheit und Zuverlässigkeit von AD-Systemen. Die Komplexität dieser Systeme erfordert eine gründliche Analyse, um Sicherheitsbedenken auszuräumen und die Zuverlässigkeit insgesamt zu verbessern.

"Dynamic Risk Assessment for Vehicles of Higher Automation Levels by Deep Learning" (Feth, et al.) offenbart ein Verfahren zur dynamischen Risikobewertung, aus monokularen Bildern und Disparitätskarten, die von einer Stereokamera erstellt wurden. Stereokameras sind heutezutage in Fahrzeugen weit verbreitet und können als Standard angesehen werden. Es wurde ein Convolutional Neural Network (CNN) mit überwachtem Lernen trainiert, um das Risiko einer Fahrszene aus einem Bild dieser speziellen Szene abzuleiten. Zu diesem Zweck wurde ein Datensatz mit Fahrsituationen in einer Simulationsumgebung erstellt und diese Situationen mit einer Risikometrik annotiert.

Diese Daten dienen dann als Input für den Lernprozess. Nach dem Training ist das CNN in der Lage, das aktuelle Risiko einer Fahrsituation anhand eines Kamerasignals vorherzusagen.

"System-Level Safety Monitoring and Recovery for Perception Failures in Autonomous Vehicles" (Chakraborty et al.) offenbart ein Verfahren zur Sicherheitsüberwachung auf Systemebene in autonomen Fahrzeugen. Die Sicherheit von autonomen Fahrzeugen (AVs) hängt stark von der Korrektheit der Wahrnehmungssysteme ab. Dies hat eine Fülle von Arbeiten zur Entwicklung von Überwachungsverfahren zur Erkennung von Wahrnehmungsfehlern ausgelöst. Es ist jedoch unpraktisch und den Navigationszielen des AV abträglich, bei jedem erkannten Wahrnehmungsfehler ein ausfallsicheres Manöver auszulösen.

Nicht alle Wahrnehmungsfehler sind gleich. Einige haben keinen Einfluss auf die Sicherheit des AV (z.B. ein geparktes Fahrzeug, das weit vom Bewegungsplan des AV entfernt ist), während andere katastrophale Folgen haben können (z.B. ein Fußgänger, der entlang des Bewegungsplans des AV übersehen wird).

Letztere werden als aufgabenrelevante oder systembedingte Wahrnehmungsfehler bezeichnet. Die Identifizierung von aufgabenrelevanten Wahrnehmungsfehlern und die Reaktion darauf stellen eine große Herausforderung dar. Erstens arbeitet das AV in sehr unsicheren Umgebungen, was es schwierig macht, die Auswirkungen von Wahrnehmungsfehlern auf Systemebene zu beurteilen. Zweitens müssen die Überwachungsverfahren die Auswirkungen komplexer AV-Stapel auf Systemebene während der Laufzeit bewerten, idealerweise mit einer höheren Frequenz als der AV-Stapel. Ferner bleibt, selbst wenn der Wahrnehmungsfehler erkannt wird, möglicherweise nicht genug Zeit, um eine sichere Bewegung unter Berücksichtigung der Wahrnehmungsfehler neu zu planen.

Vor diesem Hintergrund ist es daher Aufgabe der Erfindung, ein verbessertes Verfahren zur Risikobewertung eines zu testenden Systems anzugeben.

### Offenbarung der Erfindung

Die Aufgabe wird durch ein computerimplementiertes Verfahren zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs mit den Merkmalen des Patentanspruchs 1 gelöst.

Die Aufgabe wird des Weiteren durch ein System zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs mit den Merkmalen des Patentanspruchs 13 gelöst.

Die Aufgabe wird ferner gelöst durch ein Computerprogrammprodukt mit einem Computerprogramm gemäß Anspruch 14 sowie durch einen computerlesbaren Datenträger mit Programmcode eines Computerprogramms gemäß Anspruch 15.

Die Erfindung betrifft ein computerimplementiertes Verfahren zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs.

Das Verfahren umfasst ein Bereitstellen eines ersten Datensatzes von Systemschwächen des zu testenden Systems, wobei der erste Datensatz zumindest eine, mit einer der Systemschwächen kausal in Zusammenhang stehende Auslösebedingung umfasst.

Des Weiteren umfasst das Verfahren ein Bereitstellen eines zweiten Datensatzes von der Auslösebedingung zugrunde liegenden Umfelddaten und/oder Umweltdaten, insbesondere durch eine Beschreibung einer gesamten Operational Design Domain, eine Beschreibung einer Teil-Operational Design Domain, eine Beschreibung einzelner Elemente der Operational Design Domain oder eine beliebige Verknüpfung von Verhaltenselementen der Operational Design Domain der automatisierten Fahrfunktion des Kraftfahrzeugs abgedeckte Umfelddaten und/oder Umweltdaten, des Kraftfahrzeugs.

Das Verfahren umfasst überdies ein Modellieren der Auslösebedingung durch ein Vorhersagemodell, insbesondere ein Markov-Modell, zum Bestimmen der Auftrittswahrscheinlichkeit der Auslösebedingung für die jeweilige Systemschwäche des zu testenden Systems basierend auf dem ersten und zweiten Datensatz.

Darüber hinaus umfasst das Verfahren ein Ausgeben eines dritten Datensatzes umfassend die bestimmte Auftrittswahrscheinlichkeit der Auslösebedingung für die jeweilige Systemschwäche des zu testenden Systems.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Die Auftrittswahrscheinlichkeit bezeichnet den statistischen Erwartungswert oder die geschätzte Wahrscheinlichkeit für das Eintreten eines bestimmten Ereignisses in einem bestimmten Zeitraum in der Zukunft. Die Auftrittswahrscheinlichkeit ist ein Begriff der Wahrscheinlichkeitsrechnung bzw. Statistik und wird in Prozent oder als ein Wert zwischen 0 und 1 angegeben.

Der Begriff Auslösebedingung bzw. Triggerbedingung bezieht sich auf zumindest ein spezifisches Kriterium oder Ereignis, das die Auslösung einer Systemschwäche des zu testenden Systems zur Folge hat.

Systemschwäche bezeichnet die Tatsache, dass ein System seine erforderlichen Funktionen unter vorgegebenen Bedingungen über einen bestimmten Zeitraum nicht oder nur teilweise ausführen kann.

Der Fachmann versteht unter einem Bereitstellen eines ersten Datensatzes von Systemschwächen des zu testenden Systems, dass der Datensatz entweder von einem internen oder externen Speichermedium empfangen bzw. abgerufen wird.

Umfelddaten können beispielsweise durch zumindest einen fahrzeuggebundenen Sensor erfasste Daten einer Fahrzeugumfeldes sein, z.B. eine Verkehrssituation, ein Fahrverhalten oder ein Fahrzustand eines Ego-Fahrzeugs oder eines Fellow-Fahrzeugs sowie Daten betreffend eine Verkehrsinfrastruktur wie z.B. Verkehrszeichen und/oder Ampeln.

Umweltdaten können beispielsweise Daten betreffend eine Wetterlage, einer Tageszeit, Lichtverhältnissen Sichtverhältnissen, etc. sein.

Operational Design Domain (ODD) ist ein Begriff für einen bestimmten Betriebskontext eines automatisierten Systems, der häufig im Bereich autonomer Fahrzeuge verwendet wird. Der Kontext wird durch eine Reihe von Bedingungen definiert, darunter Umwelt-, geografische, tageszeitliche und andere Bedingungen. Bei Fahrzeugen werden auch Verkehrs- und Fahrbahnmerkmale einbezogen. Hersteller verwenden die ODD, um anzugeben, wo bzw. wie ihr Produkt sicher funktioniert. Das Konzept geht davon aus, dass automatisierten Systemen Grenzen gesetzt sind. Die Verknüpfung der Systemfunktion mit der von ihr unterstützten ODD ist für Entwickler und Regulierungsbehörden wichtig, um sichere Betriebsbedingungen festzulegen und zu kommunizieren.

Ein Verhaltenselement der Operational Design Domain ist beispielsweise ein Umweltzustand, z.B. ein Bewölkungsgrad, eine Regenmenge, Nebel, Schnee, Lichtverhältnisse, etc.

Das Modellieren einer Auslösebedingung im Kontext eines Markov-Modells bezeichnet die Modellierung als Markovkette, d.h. dass das System auf zufällige Weise von einem Zustand in einen anderen übergeht, wobei die Übergangswahrscheinlichkeiten nur jeweils vom aktuellen Zustand abhängen, aber nicht von den davor eingenommenen Zuständen. Ferner wird angenommen, dass die Übergangswahrscheinlichkeiten für die bestehende Datenlage über die Zeit konstant sind. Werden neue Daten in das Modell implementiert, können sich die Übergangswahrscheinlichkeiten entsprechend verändern.

Das Ausgeben eines dritten Datensatzes erfolgt durch eine Datenausgabeeinheit wie beispielsweise eine zentrale Recheneinheit eines Rechners, durch welche der Datensatz bereitgestellt wird.

In der Statistik bezeichnet man als Prognosemodell oder Vorhersagemodell ein Modell, das eine Prognose der abhängigen Variablen y liefert und dazu einen funktionalen Zusammenhang verwendet, der durch ein Regressionsverfahren ermittelt wurde.

Ein Markov-Modell ist ein stochastisches Modell, das zur Modellierung sich zufällig verändernder Systeme verwendet wird. Dabei wird angenommen, dass das System eine Form der Markov-Eigenschaft erfüllt: Zukünftige Zustände hängen ausschließlich vom aktuellen Zustand und nicht von vorher eingetretenen Ereignissen ab. Im Allgemeinen ermöglicht diese Annahme besondere Schlussfolgerungen und Rechentechniken.

Die Erfindung betrifft des Weiteren ein System zum Bestimmen einer Auftrittswahrscheinlichkeit einer Auslösebedingung für eine Systemschwäche eines zu testenden Systems, insbesondere einer automatisierten Fahrfunktion eines Kraftfahrzeugs.

Das System umfasst eine erste Datenbereitstellungseinheit, welche konfiguriert ist, einen ersten Datensatz von Systemschwächen des zu testenden Systems bereitzustellen, wobei der erste Datensatz zumindest eine, mit einer der Systemschwächen kausal in Zusammenhang stehende Auslösebedingung umfasst.

Des Weiteren umfasst das System eine zweite Datenbereitstellungseinheit, welche konfiguriert ist, einen zweiten Datensatz von der Auslösebedingung zugrunde liegenden Umfelddaten und/oder Umweltdaten, insbesondere durch eine Beschreibung einer gesamten Operational Design Domain, eine Beschreibung einer Teil-Operational Design Domain, eine Beschreibung einzelner Elemente der Operational Design Domain oder eine beliebige Verknüpfung von Verhaltenselementen der Operational Design Domain des Kraftfahrzeugs, bereitzustellen.

Das System umfasst ferner eine Berechnungseinheit, welche konfiguriert ist, die Auslösebedingung durch ein Vorhersagemodell, insbesondere ein Markov-Modell, zum Bestimmen der Auftrittswahrscheinlichkeit der Auslösebedingung für die Systemschwäche des zu testenden Systems basierend auf dem ersten und zweiten Datensatz zu modellieren.

Darüber hinaus umfasst das System eine Datenausgabeeinheit, welche konfiguriert ist, einen dritten Datensatz umfassend die bestimmte Auftrittswahrscheinlichkeit der Auslösebedingung für die jeweilige Systemschwäche des zu testenden Systems auszugeben.

Die erste und zweite Datenbereitstellungseinheit können z.B. durch ein Speichermedium wie eine Festplatte vorgesehen sein. Die Berechnungseinheit kann z.B. durch eine zentrale Recheneinheit eines Rechners ausgebildet sein.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Eine Idee der vorliegenden Erfindung ist es, ein Modell zur Ermittlung der Auftretenswahrscheinlichkeit einer Auslösebedingung zu erstellen, welche zu einer Systemschwäche führt.

Ferner wird ein Schweregrad der Auswirkung einer Systemschwäche auf Fahrzeugebene ermittelt.

Die Auslösebedingungen werden durch ein mathematisches Modell modelliert. Dadurch kann die Wahrscheinlichkeit für das Eintreten einer Auslösebedingung und die Auswirkung der Systemschwäche in einem geltenden Bereich angegeben und bewertet werden. Darüber hinaus kann eine Auslösebedingung angegeben werden, die im gegebenen Bereich am wahrscheinlichsten eintritt.

Ein Beispiel für eine Systemschwäche kann z.B. eine falsch-negative Erkennung eines Verkehrszeichens "100 km/h" sein, wobei die Ursache Nebel zu der falschnegativen Erkennung durch Kontrastabfall und Ausbleichen der Farbe basiert. Die Auslösebedingung ist somit Nebel.

Gemäß einer bevorzugten Weiterbildung der Erfindung ist vorgesehen, dass das Vorhersagemodell basierend auf der bestimmten Auftrittswahrscheinlichkeit der Auslösebedingung für die jeweilige Systemschwäche des zu testenden Systems eine Klassifikation eines Grades der Auslösebedingung auf das zu testende System bestimmt.

Eine Klassifikation eines Grades der Auslösebedingung kann durch einen Zahlenwert z.B. von 0 bis 1 ausgedrückt werden.

Wenn die Wahrscheinlichkeit für das Eintreten einer Auslösebedingung bekannt ist, kann die Wahrscheinlichkeit für das Auftreten einer dadurch verursachten Systemschwäche angegeben werden. Eine Auslösebedingung ist einer Systemschwäche innerhalb der Systemschwächenanalyse eindeutig zugeordnet. Dazu werden die Zustände und das Vorhersagemodell erweitert.

Gemäß einer weiteren bevorzugten Weiterbildung der Erfindung ist vorgesehen, dass falls einer Auslösebedingung keine Systemschwäche des zu testenden Systems zugeordnet ist das Vorhersagemodell eine Auftrittswahrscheinlichkeit von Zuständen innerhalb einer Operational Design Domain des zu testenden Systems bestimmt.

Auf Basis der Wahrscheinlichkeiten der Auslösebedingungen innerhalb des Vorhersagemodells kann auf die Häufigkeit des Auftretens eines Ereignisses geschlossen werden. Ferner gilt, dass für die Systemfunktion eine Maßnahme zur Vermeidung oder Verminderung der zugehörigen Systemschwäche ergriffen werden muss. Diese Maßnahme muss getestet werden. Dadurch kann abgeschätzt werden, welche Szenarien priorisiert und primär getestet werden müssen. Zudem können Zustandsfolgen von Fahrmanövern identifiziert und deren Auftrittswahrscheinlichkeiten ermittelt werden. Häufig auftretende Fahrmanöver, die zu einer Systemschwäche führen, können somit gezielter abgetestet werden, was den gesamten Testaufwand reduziert.

Gemäß einer weiteren bevorzugten Weiterbildung der Erfindung ist vorgesehen, dass das Vorhersagemodell basierend auf der bestimmten Auftrittswahrscheinlichkeit der Auslösebedingung für die jeweilige Systemschwäche des zu testenden Systems eine Wahrscheinlichkeit für das Auftreten der dadurch bewirkten Systemschwäche des das zu testende System umfassenden Kraftfahrzeugs bestimmt.

Durch die Betrachtung der Auslösebedingungen können ferner Aussagen für Subsysteme- und/oder Komponenten getätigt werden. Die Wahrscheinlichkeiten müssen nicht mehr wie bislang auf Fahrzeugebene angegeben werden, sondern Systemgrenzen können identifiziert und gezielt getestet werden. Ebenfalls sind Zusammenhänge anhand identischer Auslösebedingungen in einer Systemschwächenanalyse erkennbar, die durch herkömmliche Architekturtätigkeiten nicht erfassbar sind.

Durch die Bewertung der Auslösebedingung kann die Auftrittswahrscheinlichkeit der Systemschwächen bewertet, sowie Maßnahmen abgeleitet werden. Zusammen mit der Ausfallswahrscheinlichkeit sporadischer Hardware- und systematischer Softwareausfälle und der bestimmten Auslösebedingung kann das Restrisiko genauer ermittelt werden.

Gemäß einer weiteren bevorzugten Weiterbildung der Erfindung ist vorgesehen, dass das Vorhersagemodell basierend auf der bestimmten Systemschwäche des zu testenden Systems eine Systemschwäche eines Gesamtsystems und/oder von Sub-Systemen des zu testenden Systems bestimmt. Durch die Betrachtung der Auslösebedingungen können somit Aussagen für Subsysteme- und/oder Komponenten als auch das Gesamtsystem getroffen werden.

Gemäß einer weiteren bevorzugten Weiterbildung der Erfindung ist vorgesehen, dass das Vorhersagemodell einen Auswirkungsgrad einer durch eine einzelne Auslösebedingung und/oder eine Kombination verschiedener Auslösebedingungen bewirkten Systemschwäche des zu testenden Systems auf Fahrzeugebene bestimmt.

Auf Fahrzeugebene bedeutet, dass nicht nur ein Subsystem des Fahrzeugs von der Systemschwäche betroffen ist, sondern dass das Fahrzeug selbst in Konsequenz eine Fehlfunktion aufweist, wie z.B. einen unnötigen Bremseingriff durchführt.

Eine Auslösebedingung ist einer Systemschwäche innerhalb der Systemschwächenanalyse eindeutig zugeordnet. Dies gilt sowohl für Systemschwächen, die durch eine Auslösebedingung ausgelöst werden (Single-point insufficiency) sowie für Systemschwächen, die nur in Kombination durch mehrere Auslösebedingungen (multi-point insufficiency) ausgelöst werden. Darüber hinaus kann die Ausfallwahrscheinlichkeit des gesamten Systems bestimmt werden sowie das System beliebig in Sub-Systeme zerlegt werden.

Gemäß einer weiteren bevorzugten Weiterbildung der Erfindung ist vorgesehen, dass identifiziert wird, ob die bestimmte Auslösebedingung für die Systemschwäche des zu testenden Systems innerhalb oder außerhalb der Operational Design Domain des zu testenden Systems liegt.

Jeder Zustand wird gemäß der Operational Design Domain markiert, ob sich dieser innerhalb oder außerhalb der Operational Design Domain befindet. Von den Auslösebedingungen, die innerhalb der Operational Design Domain liegen, werden die Übergänge der Auslösebedingungen, die außerhalb der Operational Design Domain liegen, abgetestet. Das Identifizieren ist synonym mit einem Bestimmen zu verstehen.

Gemäß einer weiteren bevorzugten Weiterbildung der Erfindung ist vorgesehen, dass von einer innerhalb und/oder außerhalb der Operational Design Domain liegenden Auslösebedingung ein Testfall eines virtuellen Tests zum Testen und/oder Validieren der automatisierten Fahrfunktion des Kraftfahrzeugs für einen Übergang der Auslösebedingung zu einer innerhalb und/oder außerhalb der Operational Design Domain liegenden Auslösebedingung erstellt und/oder eine Realfahrt des Kraftfahrzeugs durchgeführt wird.

Das virtuelle Testen ist ein notwendiges Instrument, um eine virtuelle Homologation in der Fahrzeugentwicklung zu erreichen. Durch den Einsatz fortschrittlicher Simulations- und Modellierungstechniken können reale Szenarien virtuell nachgebildet und so sicherstellt werden, dass Fahrzeuge und Systeme Anforderungen der Aufsichtsbehörden erfüllen.

Eine Realfahrt des Kraftfahrzeugs ist als eine Fahrt eines physischen Fahrzeugs im Straßenverkehr zu verstehen.

So können z.B. noch unbekannte Systemschwächen identifiziert werden. Liefert die Simulation keinerlei weiteren Erkenntnisgewinn, so ist davon auszugehen, dass das System hinreichend sicher ist.

Da ein Modell für die Auslösebedingungen vorliegt, liefert es die unterschiedlichen Zustände und Zustandsübergange. Die Übergänge von einem Zustand in den anderen werden durch das Modell beschrieben. Zudem wird die Übergangswahrscheinlichkeit von Zuständen innerhalb der Operational Design Domain auf Zustände außerhalb der Operational Design Domain angegeben. Das Modell bringt somit ein einfaches und systematisches Vorgehen auf Basis der Auslösebedingungen mit sich. Durch das mathematische Modell wird eine objektivere Bewertung der Grenzen der Operational Design Domain ermöglicht.

Gemäß einer weiteren bevorzugten Weiterbildung der Erfindung ist vorgesehen, dass eine Zustandsfolge eines Fahrmanövers des Kraftfahrzeugs identifiziert und dessen Auftrittswahrscheinlichkeit bestimmt wird, wobei für Fahrmanöver, die zu einer Systemschwäche des zu testenden Systems führen, ein Testfall eines virtuellen Tests zum Testen und/oder Validieren der automatisierten Fahrfunktion des Kraftfahrzeugs erzeugt und/oder eine Realfahrt des Kraftfahrzeugs durchgeführt wird.

Die Zustandsfolge eines Fahrmanövers eines Kraftfahrzeugs beschreibt die zeitliche Abfolge von Zuständen, die das Fahrzeug während eines bestimmten Fahrmanövers (z.B. Spurwechsel, Abbiegen, Abbremsen) durchläuft. Diese Abfolge lässt sich durch ein Modell, wie beispielsweise ein Markov-Modell, beschreiben, wobei jeder Zustand durch spezifische Parameter oder Bedingungen charakterisiert wird, die das Fahrzeug in seiner Umgebung und seinem Verhalten definieren.

Wenn bekannt ist, welche Auslösebedingung, d.h. welcher Zustand im Vorhersagemodell zu einer Systemschwäche führt, kann diese systematisch mitigiert oder eliminiert werden. Zudem können zufällige Testfälle aus Zuständen im Vorhersagemodell, die laut Analyse als sicherer Zustand eingestuft werden, erstellt werden.

Falls ein Test nicht bestanden wird, kann überprüft werden, ob eine neue Systemschwäche identifiziert wurde. Falls multiple randomisierte sichere Zustände zu keinem weiteren Erkenntnisgewinn führen, ist davon auszugehen, dass das System in dem definierten Zustandsbereich somit hinreichend sicher ist.

Gemäß einer weiteren bevorzugten Weiterbildung der Erfindung ist vorgesehen, dass eine Auftrittswahrscheinlichkeit der Zustandsfolge des Fahrmanövers des Kraftfahrzeugs ermittelt wird, wobei Fahrmanöver, die zu einer Systemschwäche des zu testenden Systems führen, priorisiert getestet werden. Häufig auftretene Fahrmanöver, die zu einer Systemschwäche führen, können somit gezielter abgetestet werden, was den gesamten Testaufwand reduziert.

Die Tatsache, dass Fahrmanöver, die zu einer Systemschwäche des zu testenden Systems führen, priorisiert getestet werden, soll heißen, dass diese gegenüber Fahrmanövern, die nicht zu einer Systemschwäche des zu testenden Systems führen, vorrangig getestet werden.

Gemäß einer weiteren bevorzugten Weiterbildung der Erfindung ist vorgesehen, dass basierend auf der bestimmten Auftrittswahrscheinlichkeit der Systemschwäche des zu testenden Systems eine Testreihenfolge der virtuellen Tests zum Testen und/oder Validieren der automatisierten Fahrfunktion des Kraftfahrzeugs ermittelt wird. Hierdurch kann eine effiziente Teststrategie abgeleitet werden.

Eine höhere Auftrittswahrscheinlichkeit der Systemschwäche des zu testenden Systems bedeutet somit, dass diese Systemschwäche in der Testreihenfolge der virtuellen Tests zum Testen und/oder Validieren der automatisierten Fahrfunktion vor einer Systemschwäche getestet wird, welche eine geringere Auftrittswahrscheinlichkeit aufweist.

Gemäß einer weiteren bevorzugten Weiterbildung der Erfindung ist vorgesehen, dass Fahrszenarien und/oder Fahrmanöver, welche Systemschwächen sind oder zu einer Fehlfunktion des Kraftfahrzeugs führen, insbesondere unter Verwendung eines Hidden Markov Modells, identifiziert werden.

Fahrszenarien und Fahrmanöver sind Elemente des szenariobasierten Testens im Rahmen virtueller Tests.

In der Systemschwächenanalyse kann beispielsweise erkannt werden, dass die Wahrscheinlichkeit für Regen, der eine Systemschwäche triggert, bei einem gewissen Prozentsatz liegt. Demnach sollten Szenarien mit Regen priorisiert getestet werden.

Zusätzlich können Fahrszenarien/-manöver betrachtet werden. Dafür kann ein Hidden Markov Modell herangezogen werden. Das Hidden Markov Modell ist ein stochastisches Modell, in dem ein System, z.B. Fahrszenarien, durch eine Verkettung unbeobachteter Zustände modelliert wird.

Die Modellierung als Markowkette bedeutet, dass das System auf zufällige Weise von einem Zustand in einen anderen übergeht, wobei die Übergangswahrscheinlichkeiten nur jeweils vom aktuellen Zustand abhängen, aber nicht von den davor eingenommenen Zuständen. Außerdem wird angenommen, dass die Übergangswahrscheinlichkeiten über die Zeit konstant sind. Bei einem Hidden Markov Modell werden jedoch nicht die Zustände selbst von außen beobachtet; sie sind verborgen (engl. hidden).

Stattdessen sind jedem dieser inneren Zustände beobachtbare Ausgabesymbole (sogenannte Emissionen) zugeordnet, die je nach Zustand mit gewissen Wahrscheinlichkeiten auftreten. Die Aufgabe besteht meist darin, aus der beobachteten Sequenz der Emissionen zu wahrscheinlichkeitstheoretischen Aussagen über die verborgenen Zustände zu kommen.

Auf Basis der Auftrittswahrscheinlichkeiten des modellierten ODD-Szenario-Aspekts und je nach zu betrachtendem System können für unterschiedliche Testphasen unterschiedliche Teststrategien angegeben werden. Simulativ können abstrakte Szenarien erzeugt werden, dessen Edge und Corner Cases priorisiert behandelt werden. Bei Open Road Testing kann "sinnvoller" getestet werden. Durch eine Hochrechnung lassen sich dann Annahmen machen, wie viel noch getestet werden muss.

Gemäß einer weiteren bevorzugten Weiterbildung der Erfindung ist ein Computerprogramm mit Programmcode vorgesehen, um zumindest Teile des vorliegenden Verfahrens in einem seiner Aspekte auszuführen, wenn das Computerprogramm auf einem Computer ausgeführt wird. Mit anderen Worten wird ein Computerprogramm(-produkt), umfassend Befehle, die bei der Ausführung des Programms durch einen Computer diesen veranlassen, das Verfahren/die Schritte des Verfahrens in einem seiner Aspekte auszuführen.

Gemäß einer weiteren bevorzugten Weiterbildung der Erfindung ist ein computerlesbarer Datenträger mit Programmcode eines Computerprogramms vorgesehen, um zumindest Teile des vorliegenden Verfahrens in einem seiner Aspekte auszuführen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des Verfahrens in einem seiner Aspekte auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig.1: ein schematisches Flussdiagramm eines Ausführungsbeispiels des beanspruchten Verfahrens; und
- Fig.2: eine beispielhafte Veranschaulichung des beanspruchten Systems.

### Ausführliche Beschreibung der Ausführungsformen

In den Figuren der Zeichnungen bezeichnen gleiche Bezugszeichen gleiche oder funktionsgleiche Elemente, Bauteile oder Komponenten, soweit nichts Gegenteiliges angegeben ist.

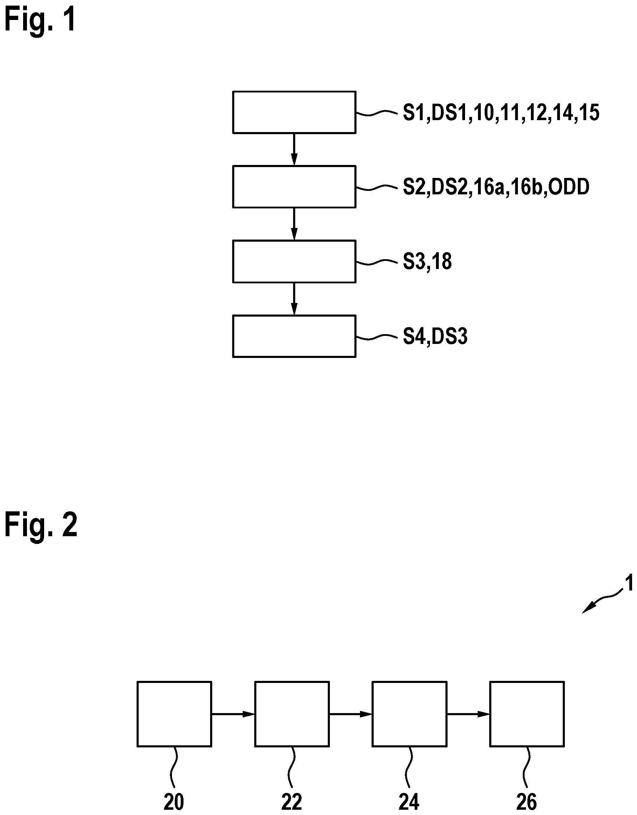

Fig. 1 zeigt ein computerimplementiertes Verfahren zum Bestimmen einer Auftrittswahrscheinlichkeit 10 einer Auslösebedingung 11 für eine Systemschwäche 12 eines zu testenden Systems 14, insbesondere einer automatisierten Fahrfunktion 15 eines Kraftfahrzeugs.

Das Verfahren umfasst ein Bereitstellen S1 eines ersten Datensatzes DS1 von Systemschwächen 12 des zu testenden Systems 14, wobei der erste Datensatz DS1 zumindest eine, mit einer der Systemschwächen 12 kausal in Zusammenhang stehende Auslösebedingung 11 umfasst.

Des Weiteren umfasst das Verfahren ein Bereitstellen S2 eines zweiten Datensatzes DS2 von der Auslösebedingung 11 zugrunde liegenden Umfelddaten 16a und/oder Umweltdaten 16b, insbesondere durch eine Beschreibung einer gesamten Operational Design Domain ODD, eine Beschreibung einer Teil-Operational Design Domain ODD, eine Beschreibung einzelner Elemente der Operational Design Domain ODD oder eine beliebige Verknüpfung von Verhaltenselementen der Operational Design Domain ODD der automatisierten Fahrfunktion 15 des Kraftfahrzeugs abgedeckte Umfelddaten 16a und/oder Umweltdaten 16b, des Kraftfahrzeugs.

Das Verfahren umfasst überdies ein Modellieren S3 der Auslösebedingung 11 durch ein Vorhersagemodell 18, insbesondere ein Markov-Modell, zum Bestimmen der Auftrittswahrscheinlichkeit 10 der Auslösebedingung 11 für die jeweilige Systemschwäche 12 des zu testenden Systems 14 basierend auf dem ersten und zweiten Datensatz DS1, DS2.

Darüber hinaus umfasst das Verfahren ein Ausgeben eines dritten Datensatzes DS3 umfassend die bestimmte Auftrittswahrscheinlichkeit 10 der Auslösebedingung 11 für die jeweilige Systemschwäche 12 des zu testenden Systems 14.

Das Vorhersagemodell 18 bestimmt ferner basierend auf der bestimmten Auftrittswahrscheinlichkeit 10 der Auslösebedingung 11 für die jeweilige Systemschwäche 12 des zu testenden Systems 14 eine Klassifikation eines Grades der Auslösebedingung 11 auf das zu testende System 14.

Falls einer Auslösebedingung 11 keine Systemschwäche 12 des zu testenden Systems 14 zugeordnet ist bestimmt das Vorhersagemodell 18 eine Auftrittswahrscheinlichkeit 10 von Zuständen innerhalb einer Operational Design Domain ODD des zu testenden Systems 14.

Das Vorhersagemodell 18 bestimmt des Weiteren basierend auf der bestimmten Auftrittswahrscheinlichkeit 10 der Auslösebedingung 11 für die jeweilige Systemschwäche 12 des zu testenden Systems 14 eine Wahrscheinlichkeit für das Auftreten der dadurch bewirkten Systemschwäche 12 des das zu testende System 14 umfassenden Kraftfahrzeugs.

Überdies bestimmt das Vorhersagemodell 18 basierend auf der bestimmten Systemschwäche 12 des zu testenden Systems 14 eine Systemschwäche 12 eines Gesamtsystems 1 und/oder von Sub-Systemen 1 des zu testenden Systems 14.

In diesem Zusammenhang bestimmt das Vorhersagemodell 18 einen Auswirkungsgrad einer durch eine einzelne Auslösebedingung 11 und/oder eine Kombination verschiedener Auslösebedingungen 11 bewirkten Systemschwäche 12 des zu testenden Systems 14 auf Fahrzeugebene.

Ferner wird identifiziert, ob die bestimmte Auslösebedingung 11 für die Systemschwäche 12 des zu testenden Systems 14 innerhalb oder außerhalb der Operational Design Domain ODD des zu testenden Systems 14 liegt.

Des Weiteren wird von einer innerhalb und/oder außerhalb der Operational Design Domain ODD liegenden Auslösebedingung 11 ein Testfall eines virtuellen Tests zum Testen und/oder Validieren der automatisierten Fahrfunktion 15 des Kraftfahrzeugs für einen Übergang der Auslösebedingung 11 zu einer innerhalb und/oder außerhalb der Operational Design Domain ODD liegenden Auslösebedingung 11 erstellt und/oder eine Realfahrt des Kraftfahrzeugs durchgeführt.

Darüber hinaus wird eine Zustandsfolge eines Fahrmanövers des Kraftfahrzeugs identifiziert und dessen Auftrittswahrscheinlichkeit 10 bestimmt. Für Fahrmanöver, die zu einer Systemschwäche 12 des zu testenden Systems 14 führen, wird ein Testfall eines virtuellen Tests zum Testen und/oder Validieren der automatisierten Fahrfunktion 15 des Kraftfahrzeugs erzeugt und/oder eine Realfahrt des Kraftfahrzeugs durchgeführt.

Überdies wird eine Auftrittswahrscheinlichkeit 10 der Zustandsfolge des Fahrmanövers des Kraftfahrzeugs ermittelt, wobei Fahrmanöver, die zu einer Systemschwäche 12 des zu testenden Systems 14 führen, priorisiert getestet werden.

Basierend auf der bestimmten Auftrittswahrscheinlichkeit 10 der Systemschwäche 12 des zu testenden Systems 14 wird ferner eine Testreihenfolge der virtuellen Tests zum Testen und/oder Validieren der automatisierten Fahrfunktion 15 des Kraftfahrzeugs ermittelt.

Darüber hinaus werden Fahrszenarien und/oder Fahrmanöver, welche Systemschwächen 12 sind oder zu einer Fehlfunktion des Kraftfahrzeugs führen, insbesondere unter Verwendung eines Hidden Markov Modells, identifiziert.

Fig.2 zeigt eine beispielhafte Veranschaulichung eines Systems 1 zum Bestimmen einer Auftrittswahrscheinlichkeit 10 einer Auslösebedingung 11 für eine Systemschwäche 12 eines zu testenden Systems 14, insbesondere einer automatisierten Fahrfunktion 15 eines Kraftfahrzeugs.

Das System 1 umfasst eine erste Datenbereitstellungseinheit 20, welche konfiguriert ist, einen ersten Datensatz von Systemschwächen 12 des zu testenden Systems 14 bereitzustellen, wobei der erste Datensatz DS1 zumindest eine, mit einer der Systemschwächen 12 kausal in Zusammenhang stehende Auslösebedingung 11 umfasst.

Des Weiteren umfasst das System 1 eine zweite Datenbereitstellungseinheit 22, welche konfiguriert ist, einen zweiten Datensatz von der Auslösebedingung 11 zugrunde liegenden Umfelddaten 16a und/oder Umweltdaten 16b, insbesondere durch eine Beschreibung einer gesamten Operational Design Domain ODD, eine Beschreibung einer Teil-Operational Design Domain ODD, eine Beschreibung einzelner Elemente der Operational Design Domain ODD oder eine beliebige Verknüpfung von Verhaltenselementen der Operational Design Domain ODD des Kraftfahrzeugs, bereitzustellen.

Das System 1 umfasst ferner eine Berechnungseinheit 24, welche konfiguriert ist, die Auslösebedingung 11 durch ein Vorhersagemodell 18, insbesondere ein Markov-Modell, zum Bestimmen der Auftrittswahrscheinlichkeit 10 der Auslösebedingung 11 für die Systemschwäche 12 des zu testenden Systems 14 basierend auf dem ersten und zweiten Datensatz DS1, DS2 zu modellieren.

Darüber hinaus umfasst das System 1 eine Datenausgabeeinheit 26, welche konfiguriert ist, einen dritten Datensatz DS3 umfassend die bestimmte Auftrittswahrscheinlichkeit 10 der Auslösebedingung 11 für die jeweilige Systemschwäche 12 des zu testenden Systems 14 auszugeben.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Die erfindungsgemäßen Verfahren können ferner zumindest abschnittsweise sequentiell oder parallel durchgeführt werden.

### Bezugszeichenliste

- 1: System
- 10: Auftrittswahrscheinlichkeit
- 11: Auslösebedingung
- 12: Systemschwäche
- 14: zu testendes System
- 15: automatisierte Fahrfunktion
- 16a: Umfelddaten
- 16b: Umweltdaten
- 18: Vorhersagemodell
- 20: erste Datenbereitstellungseinheit
- 22: zweite Datenbereitstellungseinheit
- 24: Berechnungseinheit
- 26: Datenausgabeeinheit
- DS1: erster Datensatz
- DS2: zweiter Datensatz
- DS3: dritter Datensatz
- ODD: Operational Design Domain
- S1-S4: Verfahrensschritte

## Patentansprüche

1. Computerimplementiertes Verfahren zum Bestimmen einer Auftrittswahrscheinlichkeit (10) einer Auslösebedingung (11) für eine Systemschwäche (12) eines zu testenden Systems (14), insbesondere einer automatisierten Fahrfunktion (15) eines Kraftfahrzeugs, mit den Schritten:
Bereitstellen (S1) eines ersten Datensatzes (DS1) von Systemschwächen (12) des zu testenden Systems (14), wobei der erste Datensatz (DS1) zumindest eine, mit einer der Systemschwächen (12) kausal in Zusammenhang stehende Auslösebedingung (11) umfasst;
Bereitstellen (S2) eines zweiten Datensatzes (DS2) von der Auslösebedingung (11) zugrunde liegenden Umfelddaten (16a) und/oder Umweltdaten (16b), insbesondere durch eine Beschreibung einer gesamten Operational Design Domain (ODD), eine Beschreibung einer Teil-Operational Design Domain (ODD), eine Beschreibung einzelner Elemente der Operational Design Domain (ODD) oder eine beliebige Verknüpfung von Verhaltenselementen der Operational Design Domain (ODD) der automatisierten Fahrfunktion (15) des Kraftfahrzeugs abgedeckte Umfelddaten (16a) und/oder Umweltdaten (16b), des Kraftfahrzeugs;
Modellieren (S3) der Auslösebedingung (11) durch ein Vorhersagemodell (18), insbesondere ein Markov-Modell, zum Bestimmen der Auftrittswahrscheinlichkeit (10) der Auslösebedingung (11) für die jeweilige Systemschwäche (12) des zu testenden Systems (14) basierend auf dem ersten und zweiten Datensatz (DS1, DS2); und
Ausgeben (S4) eines dritten Datensatzes (DS3) umfassend die bestimmte Auftrittswahrscheinlichkeit (10) der Auslösebedingung (11) für die jeweilige Systemschwäche (12) des zu testenden Systems (14).

2. Computerimplementiertes Verfahren nach Anspruch 1, wobei das Vorhersagemodell (18) basierend auf der bestimmten Auftrittswahrscheinlichkeit (10) der Auslösebedingung (11) für die jeweilige Systemschwäche (12) des zu testenden Systems (14) eine Klassifikation eines Grades der Auslösebedingung (11) auf das zu testende System (14) bestimmt.

3. Computerimplementiertes Verfahren nach Anspruch 1 oder 2, wobei falls einer Auslösebedingung (11) keine Systemschwäche (12) des zu testenden Systems (14) zugeordnet ist das Vorhersagemodell (18) eine Auftrittswahrscheinlichkeit (10) von Zuständen innerhalb einer Operational Design Domain (ODD) des zu testenden Systems (14) bestimmt.

4. Computerimplementiertes Verfahren nach einem der vorhergehenden Ansprüche, wobei das Vorhersagemodell (18) basierend auf der bestimmten Auftrittswahrscheinlichkeit (10) der Auslösebedingung (11) für die jeweilige Systemschwäche (12) des zu testenden Systems (14) eine Wahrscheinlichkeit für das Auftreten der dadurch bewirkten Systemschwäche (12) des das zu testende System (14) umfassenden Kraftfahrzeugs bestimmt.

5. Computerimplementiertes Verfahren nach Anspruch 4, wobei das Vorhersagemodell (18) basierend auf der bestimmten Systemschwäche (12) des zu testenden Systems (14) eine Systemschwäche (12) eines Gesamtsystems (1) und/oder von Sub-Systemen (1) des zu testenden Systems (14) bestimmt.

6. Computerimplementiertes Verfahren nach einem der vorhergehenden Ansprüche, wobei das Vorhersagemodell (18) einen Auswirkungsgrad einer durch eine einzelne Auslösebedingung (11) und/oder eine Kombination verschiedener Auslösebedingungen (11) bewirkten Systemschwäche (12) des zu testenden Systems (14) auf Fahrzeugebene bestimmt.

7. Computerimplementiertes Verfahren nach einem der vorhergehenden Ansprüche, wobei identifiziert wird, ob die bestimmte Auslösebedingung (11) für die Systemschwäche (12) des zu testenden Systems (14) innerhalb oder außerhalb der Operational Design Domain (ODD) des zu testenden Systems (14) liegt.

8. Computerimplementiertes Verfahren nach Anspruch 7, wobei von einer innerhalb und/oder außerhalb der Operational Design Domain (ODD) liegenden Auslösebedingung (11) ein Testfall eines virtuellen Tests zum Testen und/oder Validieren der automatisierten Fahrfunktion (15) des Kraftfahrzeugs für einen Übergang der Auslösebedingung (11) zu einer innerhalb und/oder außerhalb der Operational Design Domain (ODD) liegenden Auslösebedingung (11) erstellt und/oder eine Realfahrt des Kraftfahrzeugs durchgeführt wird.

9. Computerimplementiertes Verfahren nach einem der vorhergehenden Ansprüche, wobei eine Zustandsfolge eines Fahrmanövers des Kraftfahrzeugs identifiziert und dessen Auftrittswahrscheinlichkeit (10) bestimmt wird, wobei für Fahrmanöver, die zu einer Systemschwäche (12) des zu testenden Systems (14) führen, ein Testfall eines virtuellen Tests zum Testen und/oder Validieren der automatisierten Fahrfunktion (15) des Kraftfahrzeugs erzeugt und/oder eine Realfahrt des Kraftfahrzeugs durchgeführt wird.

10. Computerimplementiertes Verfahren nach Anspruch 9, wobei eine Auftrittswahrscheinlichkeit (10) der Zustandsfolge des Fahrmanövers des Kraftfahrzeugs ermittelt wird, wobei Fahrmanöver, die zu einer Systemschwächen (12) des zu testenden Systems (14) führen, priorisiert getestet werden.

11. Computerimplementiertes Verfahren nach einem der Ansprüche 8 bis 10, wobei basierend auf der bestimmten Auftrittswahrscheinlichkeit (10) der Systemschwäche (12) des zu testenden Systems (14) eine Testreihenfolge der virtuellen Tests zum Testen und/oder Validieren der automatisierten Fahrfunktion (15) des Kraftfahrzeugs ermittelt wird.

12. Computerimplementiertes Verfahren nach einem der vorhergehenden Ansprüche, wobei Fahrszenarien und/oder Fahrmanöver, welche Systemschwächen (12) sind oder zu einer Fehlfunktion des Kraftfahrzeugs führen, insbesondere unter Verwendung eines Hidden Markov Modells, identifiziert werden.

13. System (1) zum Bestimmen einer Auftrittswahrscheinlichkeit (10) einer Auslösebedingung (11) für eine Systemschwäche (12) eines zu testenden Systems (14), insbesondere einer automatisierten Fahrfunktion (15) eines Kraftfahrzeugs, umfassend:
eine erste Datenbereitstellungseinheit (20), welche konfiguriert ist, einen ersten Datensatz von Systemschwächen (12) des zu testenden Systems (14) bereitzustellen, wobei der erste Datensatz (DS1) zumindest eine, mit einer der Systemschwächen (12) kausal in Zusammenhang stehende Auslösebedingung (11) umfasst;
eine zweite Datenbereitstellungseinheit (22), welche konfiguriert ist, einen zweiten Datensatz von der Auslösebedingung (11) zugrunde liegenden Umfelddaten (16a) und/oder Umweltdaten (16b), insbesondere durch eine Beschreibung einer gesamten Operational Design Domain (ODD), eine Beschreibung einer Teil-Operational Design Domain (ODD), eine Beschreibung einzelner Elemente der Operational Design Domain (ODD) oder eine beliebige Verknüpfung von Verhaltenselementen der Operational Design Domain (ODD) des Kraftfahrzeugs, bereitzustellen;
eine Berechnungseinheit (24), welche konfiguriert ist, die Auslösebedingung (11) durch ein Vorhersagemodell (18), insbesondere ein Markov-Modell, zum Bestimmen der Auftrittswahrscheinlichkeit (10) der Auslösebedingung (11) für die Systemschwäche (12) des zu testenden Systems (14) basierend auf dem ersten und zweiten Datensatz (DS1, DS2) zu modellieren; und
eine Datenausgabeeinheit (26), welche konfiguriert ist, einen dritten Datensatz (DS3) umfassend die bestimmte Auftrittswahrscheinlichkeit (10) der Auslösebedingung (11) für die jeweilige Systemschwäche (12) des zu testenden Systems (14) auszugeben.

14. Computerprogrammprodukt mit einem Computerprogramm, das Softwaremittel zur Durchführung des Verfahrens nach einem der Ansprüche 1 bis 12 umfasst, wobei das Computerprogramm auf einem Computer ausgeführt wird.

15. Computerlesbarer Datenträger mit Programmcode eines Computerprogramms, um zumindest Teile des Verfahrens nach einem der Ansprüche 1 bis 12 auszuführen, wenn das Computerprogramm auf einem Computer ausgeführt wird.
